Europäisches Patentamt

European Patent Office

Office européen des brevets

(11) Publication number: 0 354 643
A2

# EUROPEAN PATENT APPLICATION

(21) Application number: 89305005.4

(22) Date of filing: 17.05.89

(51) Int. Cl.⁴ H02K 11/00 , H02K 13/10

(30) Priority: 06.08.88 GB 8818721
13.10.88 GB 8824002

(43) Date of publication of application:
14.02.90 Bulletin 90/07

(84) Designated Contracting States:
DE ES FR SE

(71) Applicant: DELCO PRODUCTS OVERSEAS
CORPORATION
3044 West Grand Boulevard
Detroit Michigan 48202(US)

(72) Inventor: Bates, Trevor
25 Bibshall Crescent
Dunstable Bedfordshire LU6 3NF(GB)

(74) Representative: Denton, Michael John et al
Patent Section - Luton Office (F6) Vauxhall
Motors Limited P.O. Box 3 Kimpton Road
Luton Bedfordshire LU2 0SY(GB)

(54) An armature drive shaft assembly.

(57) An armature drive shaft assembly (50) for an electric motor comprising a drive shaft (51) which may or may not be connected to electrical ground; an armature (52) comprising armature windings (54) wound on the drive shaft; and a commutator (55) positioned on the drive shaft and comprising commutator segments (56) which are connected to the armature windings and a resistive moulding (70) between the commutator segments, wherein the resistive moulding (70) of the commutator (55) has been formed by adding an electrically conductive material to a dielectric material during moulding in a predetermined concentration such as to provide a predetermined linear resistance (R) between the commutator segments (56). Provides reduced RF voltage noise and reduced back EMF voltage.

Fig. 3.

## AN ARMATURE DRIVE SHAFT ASSEMBLY

This invention relates to an armature drive shaft assembly for an electric motor, and has particular application for an electric motor for use on a motor vehicle. Such electric motors are usually permanent magnet motors and include those used for the windscreen wipers, radiator cooling fan, air blower fan, window lift motors etc.

It is well known that radio frequency (RF) noise voltages are generated by electric motors due to the action of the commutator generating sparking at the interface of the commutator and the brushes. Sparking is generated by the action of the commutator switching successive armature windings to the supply voltage to cause rotation of the armature. This make and break of the armature supply voltage generates a rapid increase and then decrease in the magnetic field associated with the armature. Each time this magnetic field collapses, a high voltage is generated in the reverse direction to the supply voltage. This causes a high, substantially instantaneous, current to flow in the supply voltage circuit, generating a spark between the commutator and the brushes. This action has two effects; firstly it generates an RF current in the external supply voltage circuit, causing radio interference; and secondly it generates a high voltage transient as each commutator segment switches an armature winding from the supply voltage circuit. This problem is particularly prevalent when the electric motor is switched off, when a high back EMF or reverse voltage is generated.

Previously known arrangements for suppressing or reducing these RF currents rely on the use of components being placed across the brushes external to the armature drive shaft assembly. These known arrangements have been expensive, and are not always effective.

It is an object of this invention to substantially reduce the above mentioned two effects, and the disadvantages associated therewith, in a cost effective way.

It is also known from GB Patent No. 1360358 to provide a commutator having voltage dependent variable resistance characteristics. However, such an arrangement does not efficiently provide suppression or reduction of RF currents.

It is a further object of the present invention to overcome this disadvantage.

To this end, an armature drive shaft assembly in accordance with the present invention comprises a drive shaft; an armature comprising armature windings wound on the drive shaft; and a commutator positioned on the drive shaft and comprising commutator segments which are connected to the armature windings and a resistive moulding between the commutator segments, wherein the resistive moulding of the commutator is formed by adding an electrically conductive material to a dielectric material during moulding in a predetermined concentration such as to provide a predetermined linear resistance between the commutator segments.

The drive shaft may or may not be connected to electrical ground. When the drive shaft is connected to electrical ground, a predetermined linear resistance is provided between the commutator segments and the drive shaft.

It has been shown by tests that a simple and effective way of reducing the currents generated by the RF voltages is to provide an alternative path for these RF currents within the casing of the electric motor, thereby containing the RF currents within the casing. The present invention not only reduces the RF currents, but also provides an arrangement whereby the RF currents can be contained within the casing of the electric motor, by effectively placing a resistive path across each armature winding, and to the casing by way of the drive shaft if it is connected to electrical ground. It has been found that, where the drive shaft is connected to electrical ground, in some applications of electric motor, it is preferable to electrically isolate the resistive moulding of the commutator from the drive shaft. The present invention has the additional advantage of keeping the back EMF voltages below 150 volts at switch off, which significantly reduces electrical erosion at the interface of the brushes and the commutator, thereby extending the life of the brushes and the electric motor. The use of a linear resistance path between the commutator segments, and between the commutator segments and the drive shaft (where required) provides a more efficient suppression or reduction of RF currents, and also easier and cheaper to manufacture than the arrangement in GB Patent No. 1360358.

Preferably the commutator is formed (by moulding) as a separate assembly before positioning on the drive shaft. Alternatively, the commutator may be moulded directly on to the drive shaft. The drive shaft and the commutator may be electrically isolated by a tube of electrically insulating material positioned between the drive shaft and the commutator. The commutator segments are preferably secured in position by embedding during the moulding process. Alternatively, the commutator segments are secured in position after moulding, for example by an electrically conductive adhesive.

The resistive moulding preferably provides a linear resistance (the predetermined linear resistance) between each commutator segment (and between the commutator segments and the drive shaft, if required) in the range 25 to 200 ohms, although the present invention is not limited to these values.

The present invention also includes an electric motor having an armature drive shaft assembly as herein defined.

The present invention will now be described, by way of example, with reference to the accompanying drawings, in which:-

Figure 1 is a side view of a known armature drive shaft assembly;

Figure 2 is a diagrammatic representation of the electric circuit of the armature drive shaft assembly shown in Figure 1;

Figure 3 is a side view of an armature drive shaft assembly in accordance with the present invention;

Figure 4 is a diagrammatic representation of the electric circuit of the armature drive shaft assembly shown in Figure 3; and

Figure 5 is a diagrammatic representation of the electric circuit of a modification of the armature drive shaft assembly shown in Figure 3.

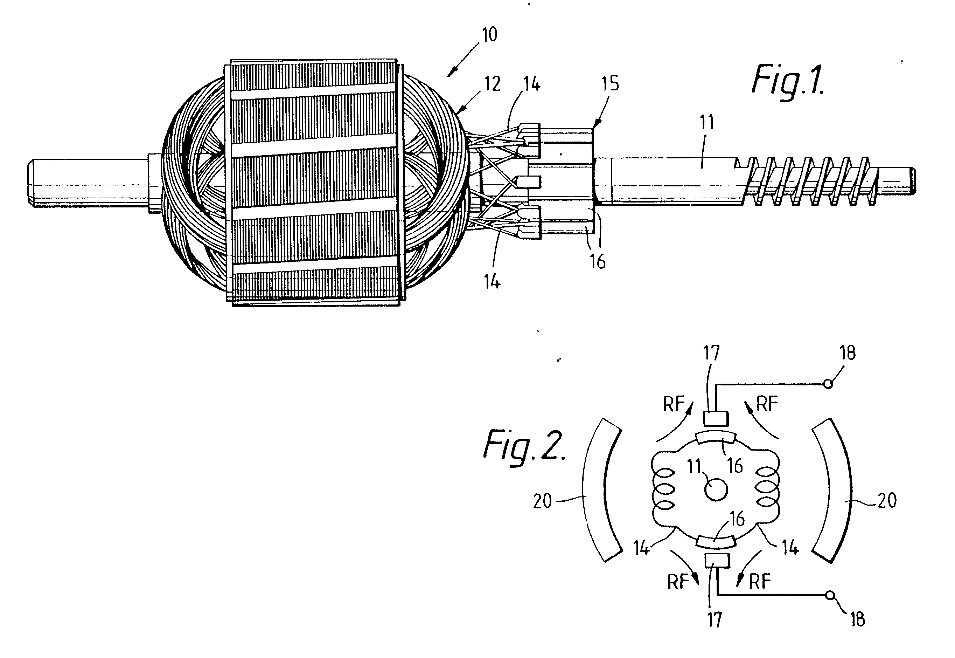

Referring to Figure 1, the known prior art arrangement of armature drive shaft assembly 10 comprises a drive shaft 11, an armature 12 comprising armature windings 14, and a commutator 15 comprising commutator segments 16 connected individually to an armature winding. The commutator 15 is moulded from a dielectric material (usually phenolic), and the commutator segments 16 (which are usually of copper material) are embedded in the dielectric material during moulding. Alternatively, the commutator segments 16 may be secured after moulding.

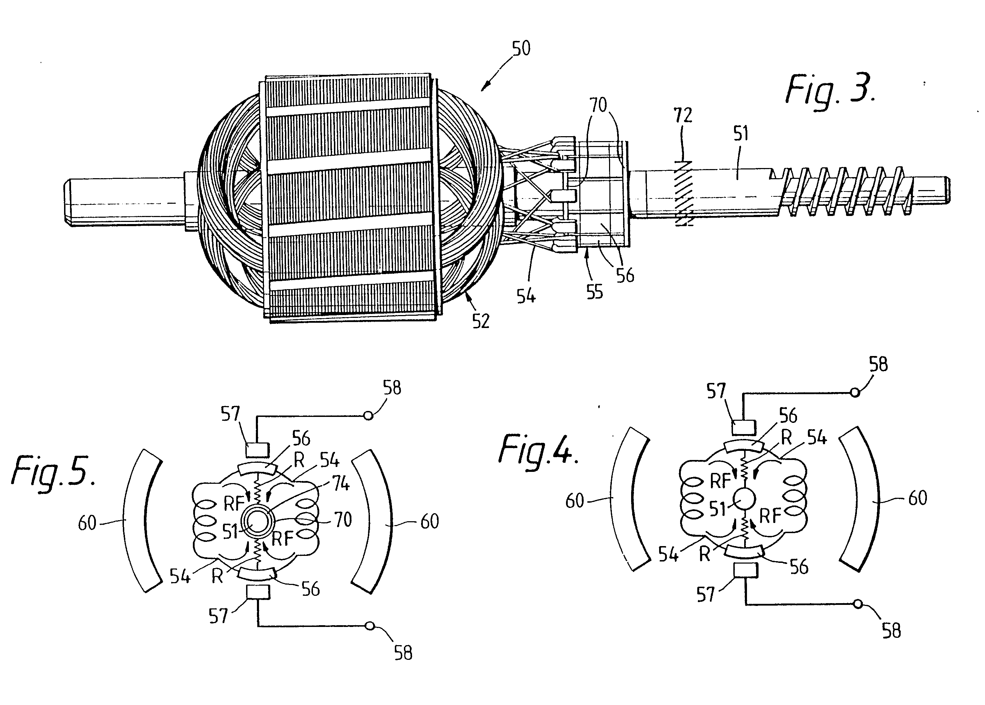

The equivalent electric circuit shown in Figure 2 includes the drive shaft 11, and a pair of commutator segments 16 connected to a pair of armature windings 14. Also shown are a pair of brushes 17 associated with the commutator 15, which are connected via terminals 18 to a supply voltage circuit (not shown), and a pair of permanent magnets 20. Although only one pair of commutator segments and armature windings is shown, it will be appreciated that the arrangement is the same for all of the commutator segments and armature windings.

In this known arrangement, sparking generated between the commutator segments 16 and the brushes 17 generates RF voltages having a current path indicated by the arrows labelled RF.

The present invention, as indicated by the embodiment shown in Figure 3, is an armature drive shaft assembly 50 comprising a drive shaft 51, an armature 52 comprising armature windings 54, and a commutator 55 comprising commutator segments 56 and an electrically resistive moulding 70, which is described in more detail below. A linear resistive path between the armature windings 54, and between the commutator segments 56 and the drive shaft 51, is therefore provided by the resistive moulding 70. The drive shaft 51 is connected to the casing (not shown) of the electric motor, and hence to ground, by way of bearing surfaces 72 for the drive shaft.

As can be seen from the equivalent electric circuit shown in Figure 4, which also shows a pair of brushes 57, terminals 58 to a supply voltage circuit (not shown), and permanent magnets 60, the resistive moulding 70 provides a linear resistive path R between the commutator segments 56 and the drive shaft 51. As a consequence, the RF current path is now through the drive shaft 51 and the casing to ground, and not through the supply voltage circuit.

The use of a resistive moulding 70 is obviously far more practical than discrete resistors placed within the assembly, as discrete resistors would cause problems with balancing of the assembly at high speeds. The advantage of the present invention is that a resistor arrangement can be provided within the assembly without affecting the balance of the assembly. This has been shown to reduce sparking at the commutator 55 by reducing the size of the RF currents generated at this source and also containing most of the RF current within the assembly itself. The present invention has been found to have the additional advantage of reducing the back EMF generated when the electric motor is switched off by providing a linear resistive path to ground for the generated currents.

The commutator 55 of the present invention is formed in any one of the usual ways, except that an electrically conductive material is added to the dielectric material during moulding to form the resistive moulding 70. The type of conductive material added, and its concentration, is chosen to give the required volume resistivity, and hence provide the most suitable resistance between the commutator segments 56, and between the commutator segments and the drive shaft 51. A preferred volume resistivity is in the range 5 to 100 ohm cm.

Suitable materials for the conductive material include carbon powder, carbon fibre, aluminium flakes, or nickel coated fibres. Suitable alternative conductive materials could, of course, be used. The concentration of conductive material can be adjusted for different applications to give the required resistance. Suitable dielectric materials include phenolic, alkyd, nylon, etc.

The preferred range for linear resistance R between each commutator segment 56 and to the drive shaft 51 for an electric motor for a windscreen wiper of a motor vehicle is 25 to 200 ohms.

This provides a compromise between adequate suppression of the RF voltage generated noise without greatly increasing the supply current. This range may be adjusted to suit other applications of electric motors.

In the modified arrangement shown in Figure 5, a tube 74 of electrically insulating material is positioned between the drive shaft 51 and the resistive moulding 70 of the commutator 55. This provides electrical isolation of the commutator 55 from the drive shaft 51 which may be required in certain applications of electric motors. In this case, a linear resistive path for the RF current is only provided across the armature windings 54.

An improvement in suppression of 10 dB has been found to be typical with a resistive moulding 70 having a resistance of 25 ohms/commutator segment. Further, the switch-off transient was found to be reduced below 150 volts, thereby reducing the electrical erosion at the commutator/brush interface, with a consequent increase in brush and motor life.

## Claims

1. An armature drive shaft assembly (50) for an electric motor comprising a drive shaft (51); an armature (52) comprising armature windings (54) wound on the drive shaft; and a commutator (55) positioned on the drive shaft and comprising commutator segments (56) which are connected to the armature windings and an electrically resistive moulding (70) between the commutator segments, characterised in that the resistive moulding (70) of the commutator (55) has been formed by adding an electrically conductive material to a dielectric material during moulding in a predetermined concentration such as to provide a predetermined linear resistance (R) between the commutator segments (56).

2. An armature drive shaft assembly as claimed in Claim 1, wherein the drive shaft (51) is connectable to electrical ground, and the resistive moulding (70) connects the commutator segments (56) to the drive shaft such as to provide a predetermined linear resistance (R) between the commutator segments and the drive shaft.

3. An armature drive shaft assembly as claimed in Claim 1, in which the commutator (55) is electrically isolated from the drive shaft (51), wherein a tube (74) of electrically insulating material is positioned between the commutator and the drive shaft.

4. An armature drive shaft assembly as claimed in any one of claims 1 to 3, wherein the commutator (55) has been moulded as a separate assembly before positioning on the drive shaft (51).

5. An armature drive shaft assembly as claimed in any one of claims 1 to 3, wherein the commutator (55) has been formed by moulding directly on to the drive shaft (51).

6. An armature drive shaft assembly as claimed in claim 4 or claim 5, wherein the commutator segments (56) have been secured in position by embedding during the moulding process.

7. An armature drive shaft assembly as claimed in claim 4 or claim 5, wherein the commutator segments (56) have been secured in position after the moulding process.

8. An armature drive shaft assembly as claimed in any one of claims 1 to 7, wherein the resistive moulding provides a linear resistance between each commutator segment (56) in the range 25 to 200 ohms.

9. An electric motor comprising an armature drive shaft assembly as claimed in any one of the preceding claims.

_Fig.1._

_Fig.2._

Fig. 3.

Fig.5.

Fig.4.

EP 0 354 643 A2